# FASCICULE DE BREVET EUROPEEN

(11) **EP 2 893 495 B1**
(45) Date de publication et mention de la délivrance du brevet: **17.08.2016**
(21) Numéro de dépôt: 13744705.8
(22) Date de dépôt: 05.07.2013
(51) Int. Cl.: G06K 19/07, H04W 88/04

(54) **PASSERELLE DE COMMUNICATION ET SYSTEME DE COMMUNICATION INCLUANT LADITE PASSERELLE DE COMMUNICATION**
KOMMUNIKATIONSGATEWAY UND KOMMUNIKATIONSSYSTEM MIT DIESEM KOMMUNIKATIONSGATEWAY
COMMUNICATION GATEWAY AND COMMUNICATION SYSTEM INCLUDING SAID COMMUNICATION GATEWAY

(30) Priorité: 07.09.2012 FR 1258385
(43) Date de publication de la demande: 15.07.2015
(73) Titulaire: Schneider Electric Industries SAS, 92500 Rueil-Malmaison (FR)
(72) Inventeur: GASSION, Romain, F-38050 Grenoble Cedex 09 (FR); COUTELOU, Olivier, F-38050 Grenoble Cedex 09 (FR)
(74) Mandataire: Tripodi, Paul
(86) Numéro de dépôt international: PCT/FR2013/051612
(87) Numéro de publication internationale: WO 2014/037634

(56) Documents cités:
- WO-A2-2008/011111
- US-A1- 2011 054 700
- US-A1- 2011 127 843

## Description

### Domaine technique de l'invention

La présente invention se rapporte à une passerelle de communication et à un système de communication incluant ladite passerelle de communication.

### Etat de la technique

Aujourd'hui, dans un but d'efficacité énergétique, les résidences sont équipées de nombreux capteurs, tels que par exemple des capteurs d'humidité, de luminosité, de température, de courant, de puissance ou d'énergie. La plupart de ces capteurs, organisés en réseau maillé, transmettent des données à travers un réseau de communication sans-fil vers une unité centrale de traitement. Le réseau de communication sans-fil s'appuie par exemple sur un protocole de type Zigbee ou Zigbee Green Power. Dans un réseau de capteurs, une interface homme-machine permet d'interagir avec les capteurs pour les configurer ou lire leurs données. Cette interface homme-machine utilise une passerelle de communication adaptée au protocole de communication employé, par exemple Zigbee ou Zigbee Green Power. Pour communiquer selon les différents protocoles, une même interface homme-machine doit alors comporter plusieurs passerelles de communication distinctes. Cependant, ce type d'interface homme-machine est peu courante. Par exemple, les téléphones mobiles disponibles sur le marché ne supportent pas des protocoles de communication de type Zigbee ou Zigbee Green Power. Une autre possibilité consiste à prévoir des interfaces homme-machine distinctes pour supporter les différents types de protocoles. Cette dernière solution est peu pratique et peu économique. Par ailleurs, pour fonctionner, chaque interface homme-machine nécessite une source d'alimentation électrique.

Le document US 2011/054700 A1 divulgue une telle disposition. Le but de l'invention est de proposer une passerelle de communication permettant à un utilisateur d'interagir facilement avec un dispositif externe, tel que par exemple un capteur, sans disposer d'une interface homme-machine dédiée à la commande de ce dispositif et sans avoir recours à une alimentation électrique.

### Exposé de l'invention

Ce but est atteint par une passerelle de communication comprenant une première interface de communication pour communiquer, à travers un premier réseau de communication, avec un terminal mobile et une deuxième interface de communication sans-fil pour communiquer, à travers un deuxième réseau de communication, avec au moins un dispositif externe, la passerelle de communication comportant :
- des moyens de récupération d'énergie électrique agencés pour récupérer une énergie électrique fournie par le terminal mobile,
- une mémoire non volatile alimentée par l'énergie électrique récupérée et un microcontrôleur connecté à la mémoire non volatile et agencé pour échanger des données avec le terminal mobile à travers le premier réseau de communication et avec le dispositif externe à travers le deuxième réseau de communication.

Selon une particularité, la première interface de communication comporte une radio-étiquette dotée d'une antenne et fonctionnant selon une technologie de communication en champ proche ou de type RFID. Selon l'invention, la passerelle de communication comporte par exemple un support destiné à recevoir ledit terminal mobile, ledit support intégrant ladite antenne.

Selon une autre particularité de l'invention, la mémoire non volatile est par exemple incluse dans la radio-étiquette.

Selon une autre particularité, la passerelle de communication comporte une liaison d'alimentation entre la radio-étiquette, le microcontrôleur et la deuxième interface de communication.

Selon l'invention, la passerelle de communication comporte des moyens de gestion de l'énergie électrique récupérée par les moyens de récupération d'énergie électrique, lesdits moyens de gestion de l'énergie électrique étant agencés pour alimenter le microcontrôleur et la deuxième interface de communication.

Selon une première variante de réalisation, les moyens de récupération d'énergie électrique comportent un module photovoltaïque et des moyens de stockage de l'énergie électrique connectés aux moyens de gestion de l'énergie électrique.

Selon une deuxième variante de réalisation, les moyens de récupération d'énergie électrique comportent une antenne agencée pour alimenter la passerelle de communication par couplage magnétique.

Avantageusement, la deuxième interface de communication comporte un circuit électronique fonctionnant selon un protocole de type Zigbee ou Zigbee Green Power et une antenne connectée audit circuit électronique.

L'invention concerne également un système de communication comportant :
- un terminal mobile comprenant une interface de communication pour communiquer à travers un premier réseau de communication et une interface d'alimentation électrique pour fournir une alimentation en énergie électrique,
- au moins un dispositif externe comportant une interface de communication sans-fil pour communiquer à travers un deuxième réseau de communication,
- une passerelle de communication comprenant une première interface de communication pour communiquer avec le terminal mobile à travers le premier réseau de communication et une deuxième interface de communication sans-fil pour communiquer avec le dispositif externe à travers le deuxième réseau de communication,
la passerelle de communication comportant :
- des moyens de récupération d'une énergie électrique fournie par l'interface d'alimentation électrique du terminal mobile,
- une mémoire non volatile alimentée par l'énergie électrique récupérée et un microcontrôleur connecté à la mémoire non volatile et agencé pour échanger des données avec le terminal mobile à travers le premier réseau de communication et avec le dispositif externe à travers le deuxième réseau de communication.

Selon une particularité, le terminal mobile comporte un lecteur/encodeur fonctionnant en champ proche ou en RFID.

Selon une autre particularité, la mémoire non volatile stocke un identifiant unique de la passerelle de communication et en ce que le terminal mobile associe une application logicielle dédiée à la commande, la lecture et/ou la surveillance du dispositif externe à l'identifiant unique mémorisée dans la mémoire non volatile de la passerelle de communication.

Selon une autre particularité, le terminal mobile comporte une interface homme-machine permettant la commande, la lecture et/ou la surveillance du dispositif externe.

Selon une autre particularité, le dispositif externe comporte un capteur ou une unité de coordination connectée à plusieurs capteurs.

Selon une autre particularité, la mémoire non volatile est agencée pour mémoriser un identifiant unique du terminal mobile et pour y associer des droits d'accès.

### Brève description des figures

D'autres caractéristiques et avantages vont apparaître dans la description détaillée qui suit faite en regard des dessins annexés, dans lesquels :
- la figure 1 représente le système de communication de l'invention, comprenant un terminal mobile, une passerelle de communication et un réseau de capteurs,
- les figures 2A et 2B représentent, respectivement en vue de face et vue de côté, un exemple de réalisation de la passerelle de communication de l'invention, sur laquelle est positionné un terminal mobile,
- la figure 3A représente, de manière schématique, l'architecture du système de l'invention selon un premier mode de réalisation,
- la figure 3B représente, de manière schématique, l'architecture du système de l'invention selon un deuxième mode de réalisation,
- la figure 3C représente, de manière schématique, l'architecture du système de l'invention selon un troisième mode de réalisation.

### Description détaillée d'au moins un mode de réalisation

L'invention concerne une passerelle de communication 1 employée pour assurer l'échange de données entre un terminal mobile 2 et un ou plusieurs dispositifs externes.

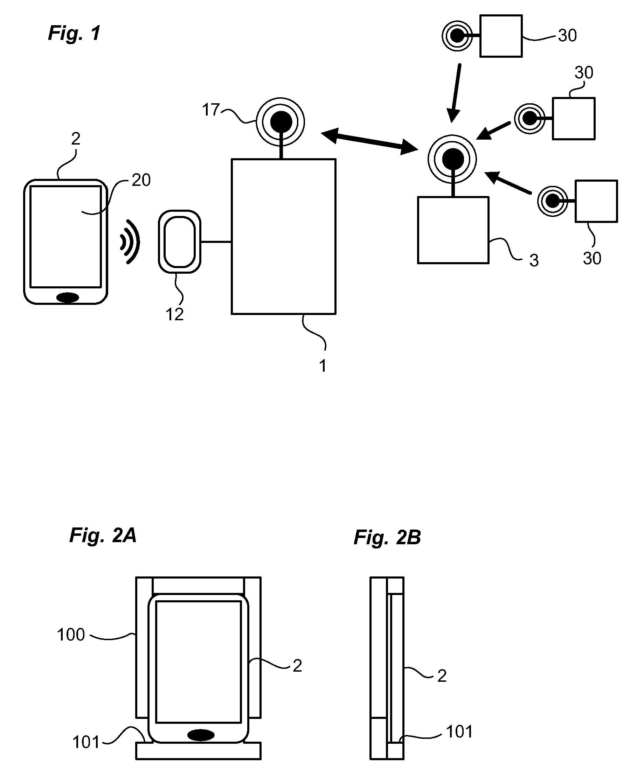

Par dispositif externe 3, on entend par exemple un ou plusieurs appareils ou une unité de coordination chargée de gérer plusieurs appareils. Comme représenté sur la figure 1, le dispositif externe 3 est par exemple une unité de coordination d'un réseau de capteurs 30 connectés entre eux. Les capteurs 30 sont par exemple employés pour enregistrer des données d'humidité, de luminosité, de gaz, de température, de courant, de puissance ou d'énergie...

Dans la suite de la description, on considérera une communication vers un seul dispositif externe 3. L'appairage entre la passerelle de communication 1 et chaque dispositif externe est réalisé par des méthodes connues.

Le dispositif externe 3 comporte une interface de communication sans-fil lui permettant d'échanger des données à travers un réseau de communication, désigné ci-après deuxième réseau de communication R2. Ce réseau de communication fonctionne par exemple suivant un protocole de type Zigbee ou Zigbee Green Power.

Le terminal mobile 2 est par exemple un téléphone mobile de type "smartphone" ou une tablette. Il comporte une interface homme-machine 20 telle que par exemple un écran tactile. Il comporte également un module de communication lui permettant d'échanger des données sur un réseau de communication, désigné ci-après premier réseau de communication R1. En plus de son module de communication, le terminal mobile 2 est équipé d'un module d'alimentation électrique permettant d'alimenter un dispositif présent à sa portée. Le module de communication et le module d'alimentation sont par exemple regroupées dans un lecteur/encodeur fonctionnant en champ proche ("NFC" pour "Near Field Communication") ou en RFID ("Radio Frequency Identification"). De manière connue, ce lecteur/encodeur 21 comporte une antenne 22 par laquelle il génère un champ magnétique permettant d'alimenter, par couplage magnétique, une radio-étiquette positionnée à sa portée.

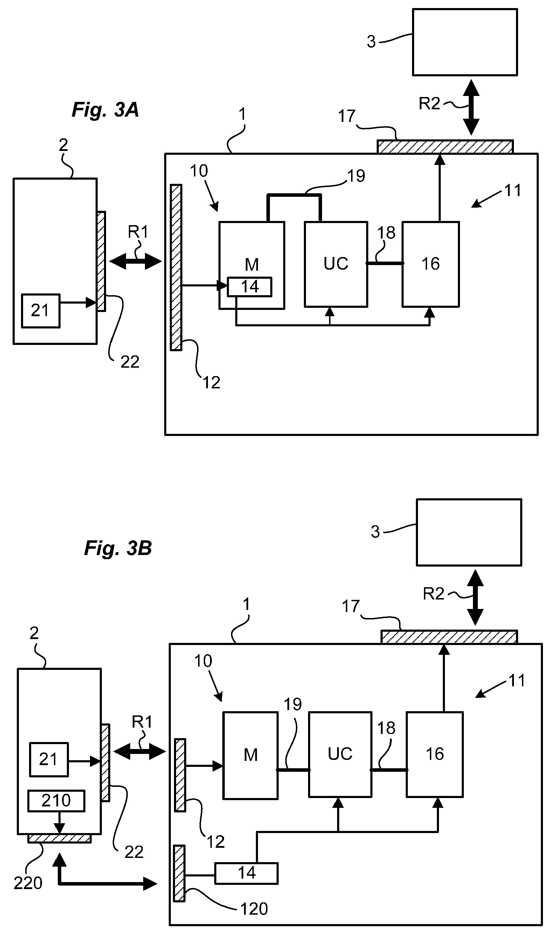

Le terminal mobile 2 peut également comporter un autre module d'alimentation et de communication 210 (figure 3B) lui permettant de communiquer sur un réseau sans-fil tel qu'un réseau GSM, GPRS, WIFI ou BlueTooth... Ce module 210 comporte également une antenne 220.

Le terminal mobile 2 comporte préférentiellement une application logicielle dédiée permettant l'échange de données avec le dispositif externe 3. Cette application logicielle est alors configurée pour interagir avec le dispositif externe 3 apparié avec la passerelle de communication 1. Elle est par exemple exécutée dès lors que le terminal mobile 2 a détecté la présence de la passerelle de communication 1 et identifié la passerelle de communication 1.

La détermination de l'application logicielle à exécuter est réalisée sur la base d'un identifiant unique de la passerelle de communication 1. Dans le terminal mobile 2, l'association entre l'identifiant unique de la passerelle de communication 1 et l'application logicielle à exécuter peut être réalisée de différentes manières. Il peut s'agir par exemple d'un paramétrage réalisé par l'utilisateur lors de la première détection de la passerelle de communication 1 par le terminal mobile 2.

Pour commander, lire et/ou configurer chaque dispositif externe 3, l'application logicielle s'appuie notamment sur l'interface homme-machine 20 du terminal mobile.

Préférentiellement, le terminal mobile 2 comporte également un identifiant unique auquel des droits d'accès particuliers peuvent être attachés. Ces droits d'accès sont par exemple gérés par la passerelle de communication 1 qui ne pourra établir une communication avec un dispositif externe 3 que si l'utilisateur du terminal mobile en a le droit. Un terminal mobile 2 ayant un identifiant administrateur peut par exemple être employé pour gérer les droits d'accès mémorisés dans la passerelle de communication 1.

La passerelle de communication 1 est destinée à une application déterminée, par exemple la commande d'interrupteurs dans une pièce, la surveillance de capteurs environnementaux, la commande d'un système de ventilation HVAC, la surveillance et le diagnostic des équipements d'une salle électrique, la surveillance de l'état d'un ou plusieurs disjoncteurs électriques, la lecture de capteurs d'énergie ou de puissance électrique...

La passerelle de communication 1 comporte une première interface de communication 10 pour communiquer avec le terminal mobile 2 à travers le premier réseau de communication R1, via une antenne 12, et une deuxième interface de communication 11 pour pouvoir communiquer avec le dispositif externe 3 à travers le deuxième réseau de communication R2, via une antenne 17. La communication entre la passerelle de communication 1 et le dispositif externe 3 pourra être réalisée à travers un ou plusieurs routeurs.

La passerelle de communication 1 comporte également des moyens de traitement tels qu'un microcontrôleur UC.

Selon l'invention, la passerelle de communication 1 ne comporte aucune source d'alimentation électrique interne, c'est-à-dire aucune pile ou batterie non-rechargeable. La passerelle de communication 1 comporte des moyens de récupération d'une énergie électrique agencés pour alimenter ses circuits internes.

Comme décrit ci-dessous en liaison avec les figures 3A à 3C, les moyens de récupération d'énergie électrique peuvent être multiples.

Dans le premier mode de réalisation représenté sur la figure 3A, la passerelle de communication est alimentée par un couplage magnétique réalisé entre le lecteur/encodeur 21 NFC ou RFID du terminal mobile 2 et la passerelle de communication 1.

Dans le deuxième mode de réalisation représenté sur la figure 3B, la passerelle de communication 1 est alimentée, via un premier canal d'alimentation, par un couplage magnétique réalisé entre le lecteur/encodeur 21 NFC ou RFID du terminal mobile 2 et la passerelle de communication 1, et/ou via un deuxième canal d'alimentation, par un couplage magnétique réalisé entre le module de communication et d'alimentation 210 du terminal mobile (GSM, GPRS, WIFI, BlueTooth...) et la passerelle de communication 1, via une antenne 120 de ladite passerelle 1.

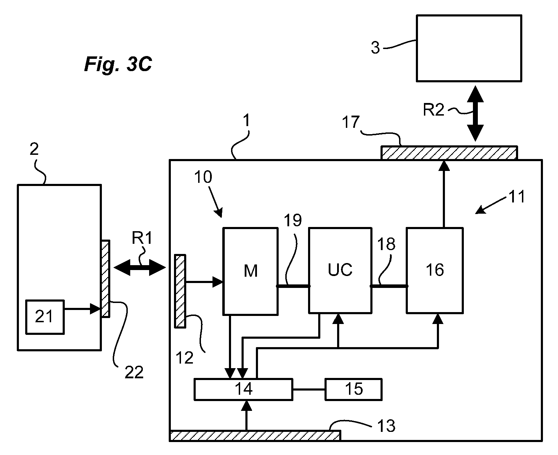

Dans le troisième mode de réalisation représenté sur la figure 3C, la passerelle de communication 1 est alimentée, via un premier canal d'alimentation, par un couplage magnétique entre le lecteur/encodeur 21 NFC ou RFID du terminal mobile 2 et la passerelle de communication 1 et/ou, via un deuxième canal d'alimentation, grâce à une énergie électrique générée par un convertisseur, telle que par exemple un module photovoltaïque 13, et stockée dans des moyens de stockage adaptés.

Préférentiellement, pour récupérer l'énergie électrique par couplage magnétique avec le lecteur/encodeur 21 NFC ou RFID du terminal mobile 2, la première interface de communication 10 est composée d'une radio-étiquette fonctionnant selon la technologie NFC ou RFID. Elle comporte ainsi une puce NFC ou RFID comprenant une mémoire non-volatile M, par exemple de type EEPROM, et l'antenne 12 destinée à rentrer en couplage magnétique avec l'antenne 22 du lecteur/encodeur 21 inclus dans le terminal mobile 2. La passerelle de communication 1 peut ainsi être alimentée par la "porteuse" émise à partir de l'antenne 22 du lecteur/encodeur 21 du terminal mobile 2. L'énergie captée par l'antenne 12 de la première interface de communication 10 est transformée en énergie électrique. La mémoire non-volatile M est par exemple alimentée directement par l'énergie électrique générée par le couplage magnétique. Elle est connectée au microcontrôleur UC par l'intermédiaire d'un bus 19 tel que par exemple un bus I2C (pour "Inter Integrated circuit").

La passerelle de communication 1 peut également comporter des moyens 14 de gestion de l'énergie électrique récupérée via la première interface de communication 10 ou via un autre canal d'alimentation tel que décrit ci-dessus. Les moyens 14 de gestion de l'énergie électrique sont agencés dans la passerelle de communication 1 pour distribuer l'énergie électrique aux composants de la passerelle, c'est-à-dire principalement le microcontrôleur UC et la deuxième interface de communication 11.

Dans le premier mode de réalisation, les moyens 14 de gestion de l'énergie électrique sont par exemple implantés directement dans le composant formant la mémoire non-volatile M.

Dans le deuxième mode de réalisation, les moyens de gestion de l'énergie électrique sont connectés à l'antenne 120 destinée à capter une énergie électrique générée par le module de communication et d'alimentation 210 du terminal mobile 2.

Dans le troisième mode de réalisation, les moyens 14 de gestion de l'énergie électrique sont par exemple connectés au module photovoltaïque 13 et à des moyens 15 de stockage de l'énergie électrique récupérée, par exemple des condensateurs ou des batteries rechargeables.

La technologie NFC ou RFID implique le stockage d'un identifiant unique dans la mémoire non volatile M de la passerelle de communication 1. Comme décrit ci-dessus, cet identifiant unique est associé dans le terminal mobile 2 à une application logicielle à exécuter sur le terminal mobile 2. Lorsque le terminal mobile 2 est à portée de la passerelle de communication 1, le terminal mobile 2 envoie une requête initiale à la passerelle de communication afin de récupérer l'identifiant unique de la passerelle. En réponse, la passerelle de communication lui envoie son identifiant unique stockée dans sa mémoire non volatile M. Le terminal mobile 2 exécute alors l'application logicielle associée à cet identifiant unique.

La deuxième interface de communication 11 de la passerelle de communication 1 comporte un circuit électronique 16 de type émetteur/récepteur radio (IEEE 802.15.4, Zigbee, Zigbee Green Power) fonctionnant selon le protocole du deuxième réseau de communication R2 et l'antenne 17 connectée audit circuit électronique 16. Le circuit électronique 16 est connecté au microcontrôleur UC via une liaison série 18. Il permet de recevoir des messages en provenance du dispositif externe 3 via le deuxième réseau de communication R2 et de transférer des données représentatives desdits messages vers le microcontrôleur UC. Préférentiellement, la deuxième interface de communication 11 fonctionne selon un protocole de type Zigbee ou Zigbee Green Power. La passerelle de communication 1 permet ainsi à un terminal mobile 2, non équipé d'une telle interface, de pouvoir communiquer selon ce protocole avec le dispositif externe 3.

Selon l'invention, la passerelle de communication 1 est agencée pour gérer des droits d'accès à chaque dispositif externe 3 connecté. Comme décrit ci-dessus, la gestion de ces droits d'accès est par exemple réalisée sur la base de l'identifiant du terminal mobile 2 qui est approché. Par exemple, en fonction de ses droits d'accès, l'utilisateur ne pourra avoir accès qu'aux données de certains capteurs associés à la passerelle de communication 1.

En référence aux figures 2A et 2B, la passerelle de communication 1 se présente par exemple sous la forme d'un boîtier 100 comportant un support 101 destiné à supporter le terminal mobile 2. Les composants de la passerelle décrits ci-dessus, c'est-à-dire la première interface de communication 10, le microcontrôleur UC, la deuxième interface de communication 11 et les moyens 14 de gestion de l'énergie électrique sont logés dans ledit boîtier 100. Le microcontrôleur UC et la mémoire non volatile M sont préférentiellement assemblés sur une même carte électronique logée dans le boîtier.

Dans le boîtier 100, l'antenne 12 de la première interface de communication 10 est préférentiellement positionnée sous l'emplacement destiné à accueillir le terminal mobile 2 afin de pouvoir réaliser un couplage magnétique maximal entre le terminal mobile 2 et la passerelle de communication 1.

Selon l'invention, le support 101 est agencé pour recevoir le terminal mobile 2 en position verticale ou en position horizontale. Il comporte par exemple un organe de réglage permettant d'adapter l'écartement du support à la taille du terminal mobile 2.

Dans le premier mode de réalisation représenté sur la figure 3A, le principe de fonctionnement de la passerelle de communication 1 est le suivant :
- Le terminal mobile 2 est approché de la passerelle de communication 1. Il est par exemple fixé sur le support 101 prévu. Le couplage magnétique entre le lecteur/encodeur 21 du terminal mobile 2 et l'antenne 12 de la première interface de communication 10 de la passerelle de communication 1, permet d'alimenter la mémoire non volatile M et le microcontrôleur UC.
- Une fois la passerelle de communication 1 alimentée, celle-ci fait l'inventaire des dispositifs avec lesquels elle peut communiquer.
- Le terminal mobile 2 envoie une requête à la passerelle de communication 1 afin de récupérer son identifiant unique. En réponse à la requête, la passerelle de communication 1 envoie son identifiant unique.
- Le terminal mobile 2 exécute l'application logicielle associée à l'identifiant unique de la passerelle de communication 1.
- La passerelle de communication 1 peut éventuellement gérer des droits d'accès sur certains dispositifs, tenant compte de l'identifiant du terminal mobile 2 approché.
- A partir de l'application logicielle exécutée sur le terminal mobile 2 et via le premier réseau de communication R1, le terminal mobile écrit une requête dans la mémoire non volatile M de la passerelle de communication 1.
- Le microcontrôleur UC de la passerelle de communication 1 lit la requête écrite dans la mémoire non volatile M et la transmet vers le dispositif externe 3 en commandant la deuxième interface de communication 11.
- La deuxième interface de communication 11 envoie un message au dispositif externe via le deuxième réseau de communication R2 et se place ensuite dans un mode de réception, en attente d'une réponse.
- Le dispositif externe 3 génère une réponse et la transmet à la passerelle de communication 1 via le deuxième réseau de communication R2.
- La réponse reçue par la deuxième interface de communication 11 est lue par le microcontrôleur UC et écrite dans la mémoire non volatile M.
- Si aucune réponse n'est transmise par le dispositif externe 3 au bout d'une durée déterminée, par exemple pré-mémorisée, le microcontrôleur UC inscrit dans la mémoire non volatile M un message d'absence de réponse.
- Le terminal mobile 2, toujours connecté à la passerelle de communication 1 via le premier réseau de communication R1, lit la réponse stockée dans la mémoire non volatile M et affiche une information correspondante sur son interface homme-machine 20.
- Le terminal mobile 2 stoppe l'alimentation en énergie de la passerelle de communication 1.

Dans le deuxième mode de réalisation représenté sur la figure 3B, le principe de fonctionnement est le suivant :
- Le terminal mobile 2 est approché de la passerelle de communication 1. Il est par exemple fixé sur le support 101 prévu. Par couplage magnétique entre le lecteur/encodeur 21 du terminal mobile 2 et l'antenne 12 de la première interface de communication 10 de la passerelle de communication 1, la mémoire non volatile M et le microcontrôleur UC sont alimentés. Le terminal mobile alimente donc la passerelle via le premier canal d'alimentation.
- Une fois la passerelle de communication 1 alimentée, celle-ci fait l'inventaire des dispositifs avec lesquels elle peut communiquer.
- Le terminal mobile 2 envoie une requête à la passerelle de communication 1 afin de récupérer son identifiant unique. En réponse à la requête, la passerelle de communication 1 envoie son identifiant unique.
- Le terminal mobile 2 exécute l'application logicielle associée à l'identifiant unique de la passerelle de communication 1.
- La passerelle de communication 1 peut éventuellement gérer des droits d'accès sur certains dispositifs, tenant compte de l'identifiant du terminal mobile 2 approché.
- A partir de l'application logicielle exécutée sur le terminal mobile 2 et via le premier réseau de communication R1, le terminal mobile écrit une requête dans la mémoire non volatile M de la passerelle de communication 1.
- Le terminal mobile 2 coupe le premier canal d'alimentation.
- Le terminal mobile 2 alimente la passerelle via le deuxième canal d'alimentation.
- Le microcontrôleur UC de la passerelle de communication 1 lit la requête écrite dans la mémoire non volatile M et la transmet vers le dispositif externe 3 en commandant la deuxième interface de communication 11.
- La deuxième interface de communication 11 envoie un message au dispositif externe via le deuxième réseau de communication R2 et se place ensuite dans un mode de réception, en attente d'une réponse.
- Le dispositif externe 3 génère une réponse et la transmet à la passerelle de communication 1 via le deuxième réseau de communication R2.
- La réponse reçue par la deuxième interface de communication 11 est lue par le microcontrôleur UC et écrite dans la mémoire non volatile M.
- Si aucune réponse n'est transmise par le dispositif externe 3 au bout d'une durée déterminée, par exemple pré-mémorisée, le microcontrôleur UC inscrit dans la mémoire non volatile M un message d'absence de réponse.
- Le terminal mobile coupe le deuxième canal d'alimentation et alimente la passerelle via le premier canal d'alimentation.
- Le terminal mobile 2 lit la réponse stockée dans la mémoire non volatile M et affiche une information correspondante sur son interface homme-machine 20.
- Le terminal mobile coupe le premier canal d'alimentation.

Dans le troisième mode de réalisation représenté sur la figure 3B, le principe de fonctionnement est le suivant :
- Le terminal mobile 2 est approché de la passerelle de communication 1. Il est par exemple fixé sur le support 101 prévu. Par couplage magnétique entre le lecteur/encodeur 21 du terminal mobile 2 et l'antenne 12 de la première interface de communication 10 de la passerelle de communication 1, la mémoire non volatile M et le microcontrôleur UC sont alimentés. Le premier canal d'alimentation est donc activé.
- Une fois la passerelle de communication 1 alimentée, celle-ci fait l'inventaire des dispositifs avec lesquels elle peut communiquer.
- Le terminal mobile 2 envoie une requête à la passerelle de communication 1 afin de récupérer son identifiant unique. En réponse à la requête, la passerelle de communication 1 envoie son identifiant unique.
- Le terminal mobile 2 exécute l'application logicielle associée à l'identifiant unique de la passerelle de communication 1.
- La passerelle de communication 1 peut éventuellement gérer des droits d'accès sur certains dispositifs, tenant compte de l'identifiant du terminal mobile 2 approché.
- A partir de l'application logicielle exécutée sur le terminal mobile 2 et via le premier réseau de communication R1, le terminal mobile écrit une requête dans la mémoire non volatile M de la passerelle de communication 1.
- La mémoire non volatile M envoie un signal d'activation aux moyens 14 de gestion de l'énergie électrique, permettant ainsi d'alimenter le microcontrôleur et la deuxième interface de communication. Les moyens 14 de gestion de l'énergie électrique puisent alors l'énergie dans les moyens de stockage 15 de l'énergie électrique récupérée via le deuxième canal d'alimentation.
- Le terminal mobile 2 coupe le premier canal d'alimentation.
- Les moyens 14 de gestion de l'énergie électrique assurent l'alimentation en énergie de la passerelle de communication.
- Le microcontrôleur UC de la passerelle de communication 1 lit la requête écrite dans la mémoire non volatile M et la transmet vers le dispositif externe 3 en commandant la deuxième interface de communication 11.
- La deuxième interface de communication 11 envoie un message au dispositif externe via le deuxième réseau de communication R2 et se place ensuite dans un mode de réception, en attente d'une réponse.
- Le dispositif externe 3 génère une réponse et la transmet à la passerelle de communication 1 via le deuxième réseau de communication R2.
- La réponse reçue par la deuxième interface de communication 11 est lue par le microcontrôleur UC et écrite dans la mémoire non volatile M.
- Si aucune réponse n'est transmise par le dispositif externe 3 au bout d'une durée déterminée, par exemple pré-mémorisée, le microcontrôleur UC inscrit dans la mémoire non volatile M un message d'absence de réponse.
- Le microcontrôleur UC coupe le deuxième canal d'alimentation.
- Le terminal mobile 2 alimente la passerelle de communication via le premier canal de communication.
- Le terminal mobile 2 lit la réponse stockée dans la mémoire non volatile M et affiche une information correspondante sur son interface homme-machine 20.
- Le terminal mobile 2 coupe le premier canal d'alimentation.

La passerelle de communication 1 de l'invention et le système incluant ladite passerelle de communication 1 présentent de nombreux avantages, parmi lesquels :
- la passerelle de communication ne nécessite ni connectique, ni source d'alimentation électrique interne,
- la passerelle de communication 1 permet d'échanger des données avec des dispositifs à travers un protocole de communication non supporté par le terminal mobile 2,
- le système de communication ne nécessite le déploiement d'aucun câble d'alimentation,
- la passerelle de communication 1 peut s'adapter à différents types d'application et permet d'échanger des données avec des dispositifs diverses en disposant simplement d'un terminal mobile muni d'une interface de type NFC ou RFID.

La solution de l'invention pourra être employée dans tous types d'applications nécessitant une communication entre un terminal mobile 2 et des dispositifs communiquant selon un protocole non supporté par le terminal mobile 2.

## Revendications

1. Passerelle de communication (1) comprenant une première interface de communication (10) pour communiquer, à travers un premier réseau de communication (R1), avec un terminal mobile (2) et une deuxième interface de communication (11) sans-fil pour communiquer, à travers un deuxième réseau de communication (R2), avec au moins un dispositif externe (3), **caractérisée en ce que** la passerelle de communication (1) comporte :
- des moyens de récupération d'énergie électrique agencés pour récupérer une énergie électrique fournie par le terminal mobile (2),
- une mémoire non volatile (M) alimentée par l'énergie électrique récupérée et un microcontrôleur (UC) connecté à la mémoire non volatile (M) et agencé pour échanger des données avec le terminal mobile (2) à travers le premier réseau de communication (R1) et avec le dispositif externe (3) à travers le deuxième réseau de communication (R2).

2. Passerelle de communication selon la revendication 1, **caractérisée en ce que** la première interface de communication (10) comporte une radio-étiquette dotée d'une antenne (12) et fonctionnant selon une technologie de communication en champ proche ou de type RFID.

3. Passerelle de communication selon la revendication 2, **caractérisée en ce qu'**elle comporte un support (100) destiné à recevoir ledit terminal mobile (2), ledit support intégrant ladite antenne (12).

4. Passerelle de communication selon la revendication 2 ou 3, **caractérisée en ce que** la mémoire non volatile (M) est incluse dans la radio-étiquette.

5. Passerelle de communication selon l'une des revendications 2 à 4, **caractérisée en ce qu'**elle comporte une liaison d'alimentation entre la radio-étiquette, le microcontrôleur (UC) et la deuxième interface de communication (11).

6. Passerelle de communication selon l'une des revendications 1 à 5, **caractérisée en ce qu'**elle comporte des moyens (14) de gestion de l'énergie électrique récupérée par les moyens de récupération d'énergie électrique, lesdits moyens (14) de gestion de l'énergie électrique étant agencés pour alimenter le microcontrôleur (UC) et la deuxième interface de communication (11).

7. Passerelle de communication selon la revendication 6, **caractérisée en ce que** les moyens de récupération d'énergie électrique comportent un module photovoltaïque (13) et des moyens (15) de stockage de l'énergie électrique connectés aux moyens (14) de gestion de l'énergie électrique.

8. Passerelle de communication selon la revendication 6, **caractérisée en ce que** les moyens de récupération d'énergie électrique comportent une antenne (120) agencée pour alimenter la passerelle de communication par couplage magnétique.

9. Passerelle de communication selon l'une des revendications 1 à 8, **caractérisée en ce que** la deuxième interface de communication (11) comporte un circuit électronique (16) fonctionnant selon un protocole de type Zigbee ou Zigbee Green Power et une antenne (17) connectée audit circuit électronique.

10. Système de communication comportant :
- un terminal mobile (2) comprenant une interface de communication pour communiquer à travers un premier réseau de communication (R1) et une interface d'alimentation électrique pour fournir une alimentation en énergie électrique,
- au moins un dispositif externe (3) comportant une interface de communication sans-fil pour communiquer à travers un deuxième réseau de communication (R2),
- une passerelle de communication (1) comprenant une première interface de communication (10) pour communiquer avec le terminal mobile (2) à travers le premier réseau de communication (R1) et une deuxième interface de communication (11) sans-fil pour communiquer avec le dispositif externe (3) à travers le deuxième réseau de communication (R2),
**caractérisé en ce que** la passerelle de communication (1) comporte :
- des moyens de récupération d'une énergie électrique fournie par l'interface d'alimentation électrique du terminal mobile (2),
- une mémoire non volatile (M) alimentée par l'énergie électrique récupérée et un microcontrôleur (UC) connecté à la mémoire non volatile (M) et agencé pour échanger des données avec le terminal mobile (2) à travers le premier réseau de communication (R1) et avec le dispositif externe (3) à travers le deuxième réseau de communication (R2).

11. Système de communication selon la revendication 10, **caractérisé en ce que** le terminal mobile (2) comporte un lecteur/encodeur (21) fonctionnant en champ proche ou en RFID.

12. Système de communication selon la revendication 10 ou 11, **caractérisé en ce que** la mémoire non volatile (M) stocke un identifiant unique de la passerelle de communication et **en ce que** le terminal mobile (2) associe une application logicielle dédiée à la commande, la lecture et/ou la surveillance du dispositif externe (3) à l'identifiant unique mémorisée dans la mémoire non volatile (M) de la passerelle de communication (1).

13. Système de communication selon l'une des revendications 10 à 12, **caractérisé en ce que** le terminal mobile (2) comporte une interface homme-machine (20) permettant la commande, la lecture et/ou la surveillance du dispositif externe (3).

14. Système de communication selon l'une des revendications 10 à 13, **caractérisé en ce que** le dispositif externe (3) comporte un capteur ou une unité de coordination connectée à plusieurs capteurs.

15. Système de communication selon l'une des revendications 10 à 14, **caractérisé en ce que** la mémoire non volatile (M) est agencée pour mémoriser un identifiant unique du terminal mobile (2) et pour y associer des droits d'accès.

## Patentansprüche

1. Kommunikationsgateway (1), umfassend eine erste Kommunikationsschnittstelle (10), um über ein erstes Kommunikationsnetzwerk (R1) mit einem mobilen Endgerät (2) zu kommunizieren, und eine drahtlose zweite Kommunikationsschnittstelle (11), um über ein zweites Kommunikationsnetzwerk (R2) mit mindestens einer externen Vorrichtung (3) zu kommunizieren, **dadurch gekennzeichnet, dass** das Kommunikationsgateway (1) umfasst:
- Mittel zur Rückgewinnung von elektrischer Energie, die derart angeordnet sind, dass sie eine vom mobilen Endgerät (2) gelieferte elektrische Energie rückgewinnen,
- einen Permanentspeicher (M), der mit der rückgewonnenen elektrischen Energie versorgt wird, und einen Mikrokontroller (UC), der an den Permanentspeicher (M) angeschlossen und derart angeordnet ist, dass Daten mit dem mobilen Endgerät (2) über das erste Kommunikationsnetzwerk (R1) und mit der externen Vorrichtung (3) über das zweite Kommunikationsnetzwerk (R2) ausgetauscht werden.

2. Kommunikationsgateway nach Anspruch 1, **dadurch gekennzeichnet, dass** die erste Kommunikationsschnittstelle (10) ein Funketikett umfasst, das mit einer Antenne (12) versehen ist und nach einer Kommunikationstechnologie im Nahfeld oder vom Typ RFID funktioniert.

3. Kommunikationsgateway nach Anspruch 2, **dadurch gekennzeichnet, dass** es einen Träger (100) umfasst, der dazu bestimmt ist, das mobile Endgerät (2) aufzunehmen, wobei der Träger die Antenne (12) umfasst.

4. Kommunikationsgateway nach Anspruch 2 oder 3, **dadurch gekennzeichnet, dass** der Permanentspeicher (M) in das Funketikett eingeschlossen ist.

5. Kommunikationsgateway nach einem der Ansprüche 2 bis 4, **dadurch gekennzeichnet, dass** es eine Versorgungsverbindung zwischen dem Funketikett, dem Mikrokontroller (UC) und der zweiten Kommunikationsschnittstelle (11) umfasst.

6. Kommunikationsgateway nach einem der Ansprüche 1 bis 5, **dadurch gekennzeichnet, dass** es Mittel (14) zur Verwaltung der elektrischen Energie, die von den Mitteln zur Rückgewinnung von elektrischer Energie rückgewonnen wurde, umfasst, wobei die Mittel (14) zur Verwaltung der elektrischen Energie derart angeordnet sind, dass sie den Mikrokontroller (UC) und die zweite Kommunikationsschnittstelle (11) versorgen.

7. Kommunikationsgateway nach Anspruch 6, **dadurch gekennzeichnet, dass** die Mittel zur Rückgewinnung von elektrischer Energie ein Photovoltaikmodul (13) und Mittel (15) zur Speicherung der elektrischen Energie umfassen, die an die Mittel (14) zur Verwaltung der elektrischen Energie angeschlossen sind.

8. Kommunikationsgateway nach Anspruch 6, **dadurch gekennzeichnet, dass** die Mittel zur Rückgewinnung von elektrischer Energie eine Antenne (120) umfassen, die derart angeordnet ist, dass sie das Kommunikationsgateway durch magnetische Kopplung versorgt.

9. Kommunikationsgateway nach einem der Ansprüche 1 bis 8, **dadurch gekennzeichnet, dass** die zweite Kommunikationsschnittstelle (11) eine elektronische Schaltung (16), die nach einem Protokoll vom Typ Zigbee oder Zigbee Green Power funktioniert, und eine an die elektronische Schaltung angeschlossene Antenne (17) umfasst.

10. Kommunikationssystem, umfassend:
- ein mobiles Endgerät (2), umfassend eine Kommunikationsschnittstelle, um über ein erstes Kommunikationsnetzwerk (R1) zu kommunizieren, und eine elektrische Versorgungsschnittstelle, um eine Versorgung mit elektrischer Energie zu liefern,
- mindestens eine externe Vorrichtung (3), umfassend eine drahtlose Kommunikationsschnittstelle, um über ein zweites Kommunikationsnetzwerk (R2) zu kommunizieren,
- ein Kommunikationsgateway (1), umfassend eine erste Kommunikationsschnittstelle (10), um mit dem mobilen Endgerät (2) über das erste Kommunikationsnetzwerk (R1) zu kommunizieren, und eine drahtlose zweite Kommunikationsschnittstelle (11), um mit der externen Vorrichtung (3) über das zweite Kommunikationsnetzwerk (R2) zu kommunizieren,
**dadurch gekennzeichnet, dass** das Kommunikationsgateway (1) umfasst:
- Mittel zur Rückgewinnung von elektrischer Energie, die von des elektrischen Versorgungsschnittstelle des mobilen Endgeräts (2) geliefert wird,
- einen Permanentspeicher (M), der mit der rückgewonnenen elektrischen Energie versorgt wird, und einen Mikrokontroller (UC), der an den Permanentspeicher (M) angeschlossen und derart angeordnet ist, dass Daten mit dem mobilen Endgerät (2) über das erste Kommunikationsnetzwerk (R1) und mit der externen Vorrichtung (3) über das zweite Kommunikationsnetzwerk (R2) ausgetauscht werden.

11. Kommunikationssystem nach Anspruch 10, **dadurch gekennzeichnet, dass** das mobile Endgerät (2) einen Leser/Codierer (21) umfasst, der im Nahfeld oder in RFID funktioniert.

12. Kommunikationssystem nach Anspruch 10 oder 11, **dadurch gekennzeichnet, dass** der Permanentspeicher (M) einen einzigen Identifikator des Kommunikationsgateways speichert, und dass das mobile Endgerät (2) eine Softwareanwendung, die für die Steuerung, das Lesen und/oder die Überwachung der externen Vorrichtung (3) bestimmt ist, dem in dem Permanentspeicher (M) des Kommunikationsgateways (1) gespeicherten einzigen Identifikator zuordnet.

13. Kommunikationssystem nach einem der Ansprüche 10 bis 12, **dadurch gekennzeichnet, dass** das mobile Endgerät (2) eine Mensch-Maschine-Schnittstelle (20) umfasst, die die Steuerung, das Lesen und/oder die Überwachung der externen Vorrichtung (3) ermöglicht.

14. Kommunikationssystem nach einem der Ansprüche 10 bis 13, **dadurch gekennzeichnet, dass** die externe Vorrichtung (3) einen Sensor oder eine an mehrere Sensoren angeschlossene Koordinationseinheit umfasst.

15. Kommunikationssystem nach einem der Ansprüche 10 bis 14, **dadurch gekennzeichnet, dass** der Permanentspeicher (M) derart angeordnet ist, dass er einen einzigen Identifikator des mobilen Endgeräts (2) speichert und diesem Zugriffsrechte zuordnet.

## Claims

1. Communication gateway (1) comprising a first communication interface (10) for communicating, over a first communication network (R1), with a mobile terminal (2) and a second wireless communication interface (11) for communicating, over a second communication network (R2), with at least one external device (3), **characterized in that** the communication gateway (1) comprises:
- electrical energy recovery means arranged for recovering electrical energy supplied by the mobile terminal (2),
- a non-volatile memory (M) powered by the electrical energy recovered and a microcontroller (UC) connected to the non-volatile memory (M) and arranged for exchanging data with the mobile terminal (2) over the first communication network (R1) and with the external device (3) over the second communication network (R2).

2. Communication gateway according to Claim 1, **characterized in that** the first communication interface (10) comprises an RF tag equipped with an antenna (12) and operating according to a near-field communications technology or to RFID type.

3. Communication gateway according to Claim 2, **characterized in that** it comprises a support (100) designed to receive said mobile terminal (2), said support incorporating said antenna (12).

4. Communication gateway according to either of Claims 2 and 3, **characterized in that** the non-volatile memory (M) is included in the RF tag.

5. Communication gateway according to one of Claims 2 to 4, **characterized in that** it comprises a power supply link between the RF tag, the microcontroller (UC) and the second communication interface (11).

6. Communication gateway according to one of Claims 1 to 5, **characterized in that** it comprises means (14) for managing the electrical energy recovered by the electrical energy recovery means, said means (14) for managing the electrical energy being arranged for supplying power to the microcontroller (UC) and the second communication interface (11).

7. Communication gateway according to Claim 6, **characterized in that** the electrical energy recovery means comprise a photovoltaic module (13) and means (15) for storing the electrical energy connected to the means (14) for managing the electrical energy.

8. Communication gateway according to Claim 6, **characterized in that** the electrical energy recovery means comprise an antenna (120) arranged for supplying power to the communication gateway by magnetic coupling.

9. Communication gateway according to one of Claims 1 to 8, **characterized in that** the second communication interface (11) comprises an electronic circuit (16) operating according to a protocol of the Zigbee or Zigbee Green Power type and an antenna (17) connected to said electronic circuit.

10. Communication system comprising:
- a mobile terminal (2) comprising a communication interface for communicating over a first communication network (R1) and an electrical power supply interface for providing a supply of electrical energy,
- at least one external device (3) comprising a wireless communication interface for communicating over a second communication network (R2),
- a communication gateway (1) comprising a first communication interface (10) for communicating with the mobile terminal (2) over the first communication network (R1) and a second wireless communication interface (11) for communicating with the external device (3) over the second communication network (R2),
**characterized in that** the communication gateway (1) comprises:
- means for recovering electrical energy supplied by the electrical power supply interface of the mobile terminal (2),
- a non-volatile memory (M) powered by the electrical energy recovered and a microcontroller (UC) connected to the non-volatile memory (M) and arranged for exchanging data with the mobile terminal (2) over the first communication network (R1) and with the external device (3) over the second communication network (R2).

11. Communication system according to Claim 10, **characterized in that** the mobile terminal (2) comprises a reader/encoder (21) operating in near-field mode or in RFID mode.

12. Communication system according to either of Claims 10 and 11, **characterized in that** the non-volatile memory (M) stores a unique identifier of the communication gateway and **in that** the mobile terminal (2) associates a software application dedicated to the control, the reading and/or the monitoring of the external device (3) with the unique identifier stored in the non-volatile memory (M) of the communication gateway (1).

13. Communication system according to one of Claims 10 to 12, **characterized in that** the mobile terminal (2) comprises a man-machine interface (20) allowing the control, the reading and/or the monitoring of the external device (3).

14. Communication system according to one of Claims 10 to 13, **characterized in that** the external device (3) comprises a sensor or a coordination unit connected to several sensors.

15. Communication system according to one of Claims 10 to 14, **characterized in that** the non-volatile memory (M) is arranged for storing in memory a unique identifier of the mobile terminal (2) and for associating access rights with it.
